# EUROPEAN PATENT APPLICATION

(11) **EP 2 357 849 A2**
(43) Date of publication of application: **17.08.2011**
(21) Application number: 10154426.0
(22) Date of filing: 23.02.2010
(51) Int. Cl.: H04R 9/06, B06B 1/04

(54) **Suspension member damping for vibration actuators**

(30) Priority: 21.12.2009 EP 09180139
(71) Applicant: NXP B.V., 5656 AG Eindhoven (NL)
(72) Inventor: Papakyriacou, Maria, Redhill, Surrey RH1 1DL (GB); Wasinger, Helmut, Redhill, Surrey RH1 1DL (GB); Lang, Florian, Redhill, Surrey RH1 1DL (GB); Jenull-Halver, Uta Maria, Redhill, Surrey RH1 1DL (GB)
(74) Representative: Williamson, Paul Lewis

(57) **Abstract**

A resilient suspension member (30) for suspending a mass element (10, 12, 14, 16) of a vibration actuator. The suspension member preferably exhibits damping that is at least seven times greater than that of a corresponding suspension member of the same shape and dimensions, and formed of stainless steel. The suspension member may be formed of at least one of: a material having a laminated structure; and a plastics material. Also provided is a resilient suspension member comprising: an outer link (44), for attachment to the frame (20); an inner structure (42), for attachment to the mass element (10, 12, 14, 16); and a ring (46), connected to both the inner structure and outer link.

## Description

This invention relates to vibration actuators and, in particular, to vibration actuators suitable for use in mobile phones or other personal electronic devices.

The vibrator function used in many mobile applications as an alarm or a "silent" incoming call alert is realized by electro-mechanically exciting a mass within the device. In the past, this was commonly achieved using rotational motion of an eccentric mass. The actuation means was an electric motor.

More recently, the motor has been replaced by a mechanical resonator (a mass and spring system) in which the mass oscillates linearly. The system is driven at its resonance frequency, typically by electromagnetic excitation.

One advantage of this solution is that the vibration actuator can share components with an electro-dynamic loudspeaker. The heavy magnet system needed to drive the loudspeaker can also comprise the mass for the vibrator, resulting in reduced total costs and a more efficient use of space within the mobile device.

Known vibrators using a mechanical resonator include a flat (plate) spring element made of metal. Such springs have a relatively small damping effect at the resonance-frequency. Important mechanical characteristics of the device, such as the resonance frequency and maximum excursion of the mass, are also highly sensitive to variations in the physical dimensions of the spring. The result is that the metal spring has a relatively thin, complex and delicate geometry which must be manufactured very accurately to achieve a consistent product.

It has been proposed to achieve the required damping through additional measures, such as air damping, or the use of appropriate damping substances between the spring element and the frame. For example, viscous adhesive can be used to attach the spring to the frame. A further alternative is rigid mechanical limitation of the excursion.

According to a first aspect of the present invention, there is provided a resilient suspension member for suspending a mass element of a vibration actuator, wherein the suspension member is formed of at least one of: a material having a laminated structure; and a plastics material.

Such structures can offer higher damping due to the internal friction of the suspension member, compared with the conventional, monolithic metal spring.

The suspension member preferably has a mechanical quality factor of less than 20 for an excitation power of 1 mW.

This contrasts with a typical quality factor of 70 for a stainless steel spring. Note that the mechanical quality factor, Q, is inversely proportional to the damping. Preferably, the quality factor may be in the range 8 to 20.

The suspension member may be formed of a plastics material, and may have a mechanical quality factor of about 20.

For plastics, the damping (respectively, quality factor) remains relatively constant for variations in operating power. Q=20, ±5%, is a suitable value.

The plastics material may advantageously comprise polyoxymethylene (POM).

Among plastics materials, POM exhibits good temperature stability. By this, it is meant that the mechanical parameters (especially resonant frequency) of the device are substantially uniform throughout the temperature range 0°C to 100°C.

The suspension member may advantageously comprise a blend of POM. Such materials can offer greater damping ability, while retaining the temperature stability of POM.

The suspension member may be formed of a laminated material, and may have a mechanical quality factor of about 10.

Laminated materials - that is, those formed of two or more layers - have been found to have a damping ability that reduces with increasing operating powers. Consequently, Q=10, ±5%, at 1 mW is found to be a good starting point.

The laminated material may comprise one or more plastic layers.

The laminated material preferably comprises at least three layers, said three layers preferably comprising two metal layers with a third, non-metallic layer between them.

The outer metal layers provide temperature stability of the mechanical parameters (such as stiffness and resonant frequency); while the inner, non-metallic layer can provide the damping ability. Note that, although the stiffness of the suspension member is determined primarily by the outer metal layers, it is also affected to a lesser extent by the thickness of the third, inner layer. As the thickness of this inner layer increases, the distance between the two outer layers is increased. This makes the suspension member stiffer.

The non-metallic layer preferably comprises at least one of: an acrylic adhesive; a hot-melt adhesive; a rubber; and a double-faced adhesive tape.

These options provide good damping ability, and are easy to manufacture at low cost.

Alternatively, the three layers may comprise two outer, non-metallic (for example, plastic) layers, with a third, metallic layer between them.

According to a second aspect of the invention, there is provided a resilient suspension member for suspending a mass element of a vibration actuator from a frame of the actuator, comprising: a ring; an outer link, for connecting the ring to the frame at one or more discrete points of connection; and an inner structure, for connecting the ring to the mass element at one or more discrete points of connection.

Here, "ring" refers to a closed loop of material, having an inner and an outer perimeter. The ring may be a circular, annular ring. Alternatively, the ring may have other shapes, such as a square, rectangular, or elliptical closed loop.

Preferably, each of the inner structure and the outer link connects to the ring at a plurality of discrete points about the circumference of the ring.

Increasing the number of connections may result in increased rigidity, making the device more mechanically stable. Note that, in general, increasing the stiffness will also result in increased resonant frequency.

The points of connection of the inner structure are preferably offset circumferentially from the points of connection of the outer link.

The portions of the ring between the inner and outer connections may flex, or twist, or both, when the mass is displaced.

The points of connection are preferably uniformly distributed about the circumference of the ring.

This helps to distribute the forces evenly throughout the member.

The suspension member is preferably shaped such that, when the mass is displaced in the axial direction, any tangential forces exerted by the suspension member are balanced.

It is preferable that the mass does not rotate when it is displaced. That is, the motion of the mass should be a pure linear motion, without any rotational component. However, when using the known metal spring, the mass is mounted on arms that are all angled similarly with respect to the radial direction. This means that when the mass is displaced in the axial direction, the flexing of the arms results in rotation of the mass and the restoring force exerted by the flexing arms includes a circumferential (tangential) component. In the present case, this can be avoided by ensuring that the tangential forces are either eliminated or, if not eliminated, are at least balanced.

According to a third aspect of the invention, there is provided a resilient suspension member for suspending a mass element of a vibration actuator, exhibiting damping that is at least seven times greater than that of a corresponding suspension member of the same shape and dimensions, and formed of stainless steel.

Also provided is a vibration actuator comprising: a frame; a mass element, movably connected to the frame by a resilient suspension member as described above; and actuation means, for exciting relative movement of the mass and the body.

Here, "vibration actuator" means a transducer which generates mechanical oscillations that are perceived as vibration by humans. That is, although sounds may be emitted as a by-product of the oscillations, the dominant perception is that of vibration. Vibration can be sensed by touch, in contrast to a mere audible tone. For this purpose, a vibration actuator may have a resonant frequency less than 200Hz, more preferably about 150Hz.

The mass element may be suspended co-axially with the frame. This provides a symmetrical suspension arrangement.

Preferably, the actuation means are electromagnetic; the mass element comprises a magnet; and the magnet also comprises part of a loudspeaker.

The suspension member of the present invention may be particularly beneficial if loudspeaker and vibration functions are combined in a single device, because it allows accurate and reliable control of the maximum excursion. This results in more efficient use of the limited space (volume) available in mobile devices, in particular. If the suspension member has a progressive spring characteristic, this may be particularly beneficial when the vibration and audio functions use shared components, because the excursion of the magnet system can be kept stable even when these functions are used simultaneously.

Additionally, there is provided a personal mobile communications device comprising a vibration actuator as described above.

The various individual aspects of the invention can be combined advantageously in embodiments. Preferably, the first to third aspects are all combined together.

In all cases, the suspension member preferably exhibits a progressive spring characteristic.

Here, a progressive spring characteristic means that the restoring (resisting) force exerted by the suspension member increases out of linear proportion to the displacement of the mass. This is in contrast with the spring characteristic for a conventional metal spring, which is substantially linear. Thus, the characteristic force-displacement curve for a progressive suspension member is non-linear. To define this in different terms: the rate of increase of the restoring force is low at a relatively small displacement, and relatively higher at a larger displacement. Such a characteristic helps to keep the excursion of the oscillating mass stable, without the need for separate damping measures. This allows maximum use to be made of the available space for movement of the mass element, while avoiding impacts between the mass and other parts of the device. Such impacts could reduce operational lifetime as well as causing undesired acoustic noise. If the need for separate damping measures can be eliminated, the cost of the overall device can also be reduced.

The suspension member may be a plate spring. That is, the suspension member may be substantially flat, in its relaxed state.

The invention will now be described by way of example with reference to the accompanying drawings, in which:
Fig. 1 schematically illustrates the construction of a vibration actuator;
Fig. 2 shows a suspension member, according to a first embodiment of the invention, suitable for the vibration actuator of Fig. 1;
Fig. 3 is a plan view of the suspension member of Fig. 2; and
Fig. 4 is a plan view of a suspension member according to a second embodiment of the invention.

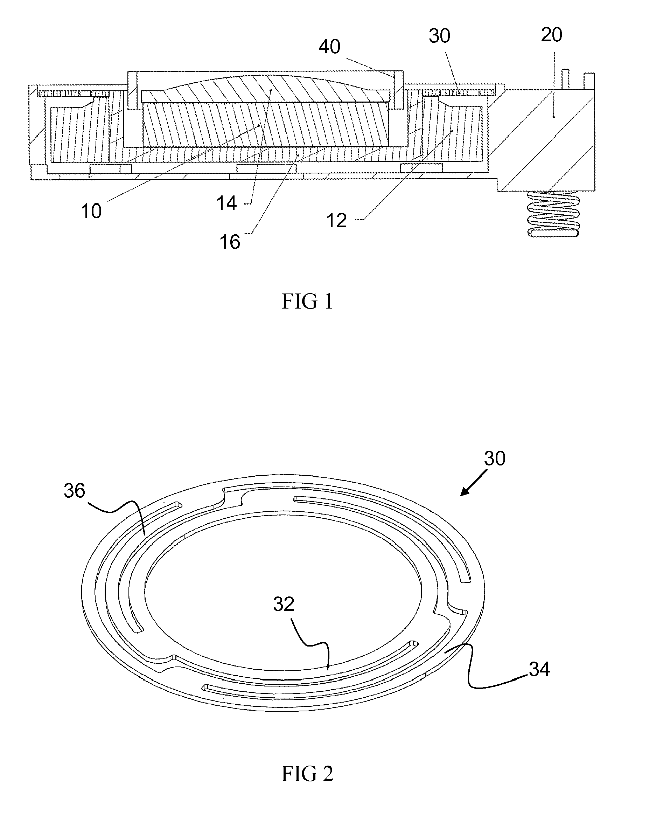

Fig. 1 shows a vibration actuator. This comprises a mass element 10, 12, 14, 16 suspended in a frame or basket-assembly 20. The movable mass is suspended from the frame by a spring 30. The mass comprises a magnetic system, which includes a magnet 10; a weight 12; a top plate 14; and a pot 16. The spring 30 is a resilient suspension member, which allows the mass element to oscillate within the frame (in the vertical direction, as shown in Fig 1).

A suitable suspension member, according to a first embodiment of the invention, is shown in greater detail in Fig 2. This comprises an inner ring 32 and an outer ring 34, connected by three arms 36. The mass is attached to the inner ring 32, while the outer ring 34 is attached to the frame. Flexing of the arms 36 enables the mass to oscillate out of the plane of the plate spring 30. However, the asymmetry of the arms 36 also causes rotational motion in the plane of the spring.

Monolithic metal plate springs of a shape similar to that illustrated in Fig. 2 are known from the prior art. However, according to the first embodiment, the suspension member is formed of a laminated material.

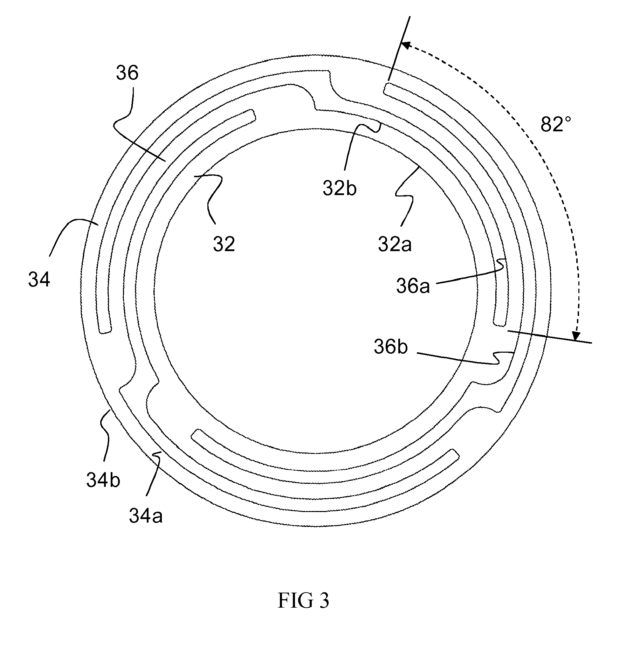

Fig. 3 shows the suspension member of Fig. 2, in plan view. The inside edge 32a of the inner annular ring 32 has a diameter of 10.6mm; and the outside edge 32b of this ring has a diameter of 11.8mm. For the outer annular ring 34, the diameter of the inside edge 34a is 14.4mm; and that of the outside edge 34b is 15.4mm. In this embodiment, there are three arms 36. These arms 36 extend circumferentially in the space between the inner and outer rings. One end of each arm 36 is connected to the outside edge 32b of inner ring 32 and the other end is connected to the inside edge 34a of the outer ring 34. The inner edge 36a and the outer edge 36b of each arm follow respective circular paths, which are concentric with the inner and outer annular rings. The inside edge 36a of each arm has a diameter of 12.6mm; and the outside edge 36b has a diameter of 13.6mm. The free part of each arm (away from the connection points to the inner and outer rings) has an angular extent of 82 degrees.

The laminate comprises three layers: two outer metal layers, with a third, non-metallic layer sandwiched between them. In this embodiment, the metal layers are made of stainless steel. The non-metallic layer is a double-faced adhesive tape. With this laminated structure, the temperature stability of the stiffness and of the resonant frequency is given by the outer metal layers; and the damping ability is given by the inner layer.

The resonant frequency is determined primarily by the stiffness of the metal layers. Thus, when designing a suspension member of this kind, the thickness of these layers is chosen according to the desired resonant frequency. For example, to achieve a resonant frequency of 150Hz with the shape shown in Fig. 3, two stainless steel layers with a thickness of 0.1mm each are necessary. The damping ability increases with the thickness of the inner, non-metallic layer initially and reaches a maximum at a certain thickness. Increasing the thickness of the inner layer beyond this threshold increases the total thickness of the suspension member, without producing any significant additional benefit. It has been found that optimal values for the thickness of the non-metallic, inner layer are typically in the range 0.05mm to 0.1 mm.

In this example, the adhesive tape comprises three layers: a foil, made of polyethylene terephthalate (PET), with a layer of adhesive on each side. To vary the thickness of such an adhesive tape, the thickness of the adhesive layers can be varied.

In this example, the suspension member is designed for a maximum excursion of the mass element of 0.7mm at a power of 30mW. This corresponds to a quality factor of Q_{1mW}=10. As is well known to those skilled in the art, damping is inversely proportional to quality factor. If the design shown in Fig. 3 were to be fabricated (in the same shape and dimensions) from stainless steel, then the quality factor would be roughly Q_{1mW}=70. That is, the laminated structure reduces the quality factor by a factor of seven. That is, it provides damping seven times greater than for monolithic stainless steel.

In other embodiments, different materials can be used in place of stainless steel and adhesive tape. For example, metals such as aluminium or copper can be used. The non-metallic layer may be formed of various materials, including acrylic adhesive; hot-melt adhesive; or natural or synthetic rubber. As will be readily apparent to those skilled in the art, different materials will typically require different dimensions in order to achieve the same mechanical parameters. Similarly, the three-layer structure can be modified, so that a single metal layer is instead provided between two plastic layers.

In still other embodiments, the suspension member 30 can be formed of a plastics material instead of laminated material.

Polyoxymethylene (POM) is one suitable plastics material. In particular, blends of POM can be beneficial. These provide good temperature stability, which is characteristic of POM; and high damping ability, due to the blending. Advantageously, a blend of POM with a thermoplastic elastomer, such as a thermoplastic polyurethane (TPU), is used. In other examples, blends or copolymers of other plastics can be used.

A thickness of about 0.4mm has been found to provide good results. A plastic suspension member of this kind has a quality factor of about Q_{1mW}=20. This is higher than that of the laminated material described above; however, it has been observed that the damping ability (respectively, quality factor) of the plastic suspension member is relatively stable with respect to variations in operating power. In contrast, the quality factor of the laminated version increases with increasing operating power - hence the need to start (at 1 mW) with a lower value of Q.

In general, the quality factor Q_{1mW} of a suspension member according to the invention should be less than 20, more preferably in the range 8 to 20.

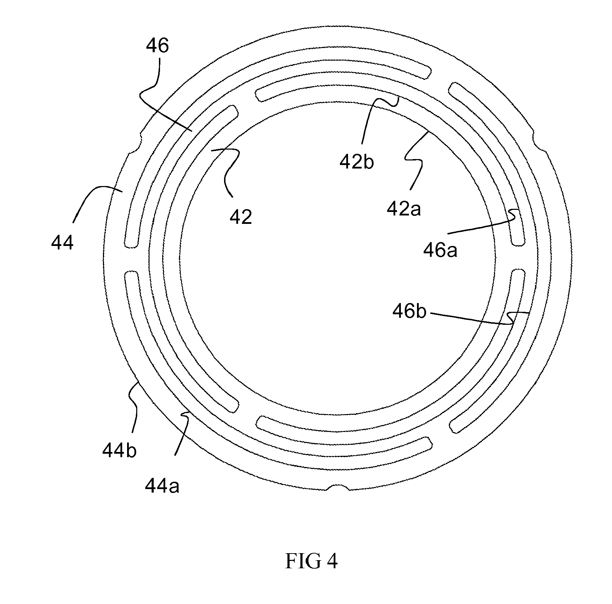

Fig 4 is a plan view of a suspension member according to a second embodiment of the invention. In this embodiment, the circumferentially extending arms 36 are replaced by a complete ring 46, which is circular and annular in shape. This design has the advantage that no net tangential force is imparted to the mass element when it is displaced in the axial direction. This contrasts with the tendency of the suspension member of Fig. 3 to cause rotation in the plane of the suspension member.

The ring 46 is provided with an outer link for connecting it to the frame of the vibration actuator. It is also provided with an inner structure for connecting it to the mass element. Both connections comprise one or more discrete points of connection. In the example of Fig. 4, the inner structure comprises an inner ring 42 with a plurality of points of connection to the intermediate ring 46. Likewise, the outer link comprises an outer ring 44 with a plurality of points of connection to the intermediate ring 46.

In the example of Fig. 4, the inside edge 42a of the inner annular ring 42 has a diameter of 10.6mm; and the outside edge 32b of this ring has a diameter of 11.8mm. For the outer annular ring 34, the diameter of the inside edge 34a is 14.4mm; and that of the outside edge 34b is 15.8mm. The inside edge 46a of the intermediate ring 46 has diameter 12.7mm; and the outside edge 46b of this ring has diameter 13.5mm. Therefore, the intermediate ring in this embodiment is slightly narrower in the radial direction than the arms 36 of the first embodiment.

The inner ring 42 is connected to the intermediate ring 46 at a first set of connection points. In this example there are three such points, spaced evenly at 120 degree intervals about the circumference. The outer ring 44 is connected to the intermediate ring 46 at a second set of connection points. There are three points in this second set, which are also uniformly distributed about the circumference. The first and second sets of connection points (connecting the intermediate ring 46 to the inner ring 42 and outer ring 44, respectively) are angularly offset from one another around the circumference. In this example, the offset is chosen to be 60 degrees, such that the first set and second set of connection points are interleaved, with a regular angle of 60 degrees between alternate, consecutive points.

As will be apparent to those skilled in the art, in other examples the inner or outer points of connection may be provided directly to the mass and the frame without the need for a closed inner or outer ring, respectively.

The same laminated or plastic materials can be used for the second embodiment as for the first embodiment, described previously above.

Suspension members according to embodiments of the invention can provide enhanced damping ability, as compared with stainless steel, or similar monolithic metal springs. In addition, each of the examples described above exhibits a non-linear, progressive force-displacement characteristic. This means that a progressively greater force is required to move the mass element at larger displacements. Conversely, if the force is increased in uniform increments, the effect of each successive increment on the position of the mass element diminishes. This type of characteristic provides stable control of the maximum excursion of the mass element.

At the same time, the key mechanical parameters (especially the resonant frequency) of the system are stable over the temperature range of interest (typically 0 to 100 degrees Celsius). This is difficult to achieve, because the requirements of damping and temperature stability tend to compete with one another.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A resilient suspension member (30) for suspending a mass element (10, 12, 14, 16) of a vibration actuator, wherein the suspension member is formed of at least one of:
a material having a laminated structure; and
a plastics material.

2. The suspension member of claim 1, having a mechanical quality factor of less than 20 for an excitation power of 1 mW.

3. The suspension member of claim 2, formed of a plastics material, and having a mechanical quality factor of about 20.

4. The suspension member of claim 3, wherein the plastics material comprises polyoxymethylene.

5. The suspension member of claim 2, formed of a laminated material, and having a mechanical quality factor of about 10.

6. The suspension member of claim 5, wherein the laminated material comprises at least three layers, said three layers preferably comprising two metal layers with a third, non-metallic layer between them

7. The suspension member of claim 6, wherein the non-metallic layer comprises at least one of:
an acrylic adhesive;
a hot-melt adhesive;
a rubber; and
a double-faced adhesive tape.

8. A resilient suspension member for suspending a mass element (10, 12, 14, 16) of a vibration actuator from a frame (20) of the actuator, comprising:
a ring (46);
an outer link (44), for connecting the ring (46) to the frame (20) at one or more discrete points of connection; and
an inner structure (42), for connecting the ring (46) to the mass element (10, 12, 14, 16) at one or more discrete points of connection.

9. The suspension member of claim 8, wherein each of the inner structure and the outer link connects to the ring (46) at a plurality of discrete points about the circumference of the ring.

10. The suspension member of claim 9, wherein the points of connection of the inner structure (42) are offset circumferentially from the points of connection of the outer link (44).

11. The suspension member of claim 9 or claim 10, wherein the points of connection are uniformly distributed about the circumference of the ring (46).

12. A resilient suspension member (30) for suspending a mass element (10, 12, 14, 16) of a vibration actuator, exhibiting damping that is at least seven times greater than that of a corresponding suspension member of the same shape and dimensions, and formed of stainless steel.

13. A vibration actuator comprising:
a frame (20);
a mass element (10, 12, 14, 16), movably connected to the frame (20) by a resilient suspension member (30) according to any preceding claim; and
actuation means, for exciting relative movement of the mass and the body.

14. A vibration actuator according to claim 13, wherein:
the actuation means are electromagnetic;
the mass element comprises a magnet (10); and
the magnet (10) also comprises part of a loudspeaker.

15. A personal mobile communications device comprising a vibration actuator according to claim 13 or claim 14.
